# EUROPEAN PATENT SPECIFICATION

(11) **EP 2 802 245 B1**
(45) Date of publication and mention of the grant of the patent: **14.12.2016**
(21) Application number: 13700281.2
(22) Date of filing: 09.01.2013
(51) Int. Cl.: A47J 31/44

(54) **BEVERAGE MACHINE WITH A REMOVABLE MODULE**
GETRÄNKEAUTOMAT MIT ENTFERNBAREM MODUL
DISTRIBUTEUR DE BOISSONS DOTÉ D'UN MODULE AMOVIBLE

(30) Priority: 13.01.2012 EP 12151064; 01.03.2012 EP 12157651
(43) Date of publication of application: 19.11.2014
(73) Proprietor: Nestec S.A., 1800 Vevey (CH)
(72) Inventor: CAHEN, Antoine, 1005 Lausanne (CH); KRISTLBAUER, Jürgen, 3052 Zollikofen (CH); BESSON, François, 2013 Colombier (CH)
(74) Representative: Schnyder, Frank Simon
(86) International application number: PCT/EP2013/050254
(87) International publication number: WO 2013/104643

(56) References cited:
- EP-A1- 1 878 368
- EP-A1- 2 186 455
- WO-A1-2006/122916
- WO-A1-2012/055767
- WO-A2-2009/013778
- WO-A2-2011/083103
- CH-A5- 683 744
- DE-U1- 9 400 834

## Description

### Field of the Invention

The present invention concerns a beverage preparation machine that has a body and a removable module that can be connected to the body, such as a module adjacent to an outer face of the body, in particular a module in the form of a storage reservoir for storing a supply of ingredient and/or waste material, such as a machine that is arranged to use capsules of a flavouring ingredient that is mixed with a liquid such as water to prepare a beverage.

### Background Art

Beverage preparation machines have been known for a number of years. For example, US 5,943,472 discloses a water circulation system between a water reservoir and a hot water or vapour distribution chamber of an espresso machine. The circulation system includes a valve, metallic heating tube and pump that are connected together and to the reservoir.

The beverage preparation machine typically includes a housing containing a beverage processing module and a liquid reservoir that is removably connected to the housing and in fluid communication with the beverage processing module. Examples of such beverage preparation machines are disclosed in EP 1 208 782, EP 1 267 687, EP 1 686 879, EP 1 731 065, EP 1 829 469, EP 1 864 598, EP 1 865 815, EP 1 867 260, EP 1 878 368, EP 2 222 210, EP 2 222 211, EP 2 222 212, EP 2 227 121, EP 2 227 122, US 2008/0006159, US 7,165,488, WO 2007/111884, WO 2009/074553 and WO 2010/015427.

WO 2009/013778 discloses a cup holder having an upper grid plate for supporting a cup under a beverage outlet and a lower tray for collecting fluid flowing through the grid plate. The grid plate and the tray are magnetically constrained together.

Co-pending application WO 2012/055767 discloses a beverage preparation machine having a body and a module connected thereto. The module can be moved into different positions about the body. The module can be a reservoir for supplying liquid such as water to the body. The body can incorporate an arrangement for processing ingredients and for dispensing a resulting beverage.

### Summary of the Invention

The invention thus relates to beverage preparation machines having a body and a removable module connectable to the body.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient. The capsule may contain an amount of ingredient for preparing a single beverage serving or a plurality of beverage servings.

The beverage preparation machine can be an in-home or out of home machine. The machine may be for the preparation of coffee, tea, chocolate, cacao, milk, soup, baby food, etc.... The machine may be arranged for preparing within a beverage processing module a beverage by passing hot or cold water or another liquid through a capsule containing an ingredient, such as a flavouring ingredient, of the beverage to be prepared, such as ground coffee or tea or chocolate or cacao or milk powder.

The beverage preparation typically includes the mixing of a plurality of beverage ingredients, e.g. water and milk powder, and/or the infusion of a beverage ingredient, such as an infusion of ground coffee or tea with water. One or more of such ingredients may be supplied in loose and/or agglomerate powder form and/or in liquid form, in particular in a concentrate form. A carrier or diluents liquid, e.g. water, may be mixed with such ingredient to form the beverage.

For instance, a predetermined amount of beverage is formed and dispensed on user-request, which corresponds to a serving. The volume of such a serving may be in the range of 25 to 200 ml and even up to 300 or 400 ml, e.g. the volume for filling a cup, depending on the type of beverage. Formed and dispensed beverages may be selected from ristrettos, espressos, lungos, cappuccinos, latte macchiato, café latte, americano coffees, teas, etc... In particular, a coffee machine may be configured for dispensing espressos, e.g. an adjustable volume of 20 to 60 ml per serving, and/or for dispensing lungos, e.g. a volume in the range of 70 to 150 ml per serving.

The invention relates to a beverage preparation machine that comprises a body having a disconnectable body connector and a beverage outlet for dispensing a beverage over a beverage dispensing area. The body may be configured for preparing a beverage by circulating a liquid, such as water, via a flavouring ingredient, such as ground coffee and/or tea leaves and/or cacao and/or milk e.g. powder milk. The flavouring ingredient may be a pre-portioned ingredient supplied into the machine body within a capsule.

Furthermore, the beverage preparation machine comprises a module having a disconnectable module connector for removably connecting the module to the body via the body connector. The module is typically external to the body and has an operative configuration for carrying out a sub-function of the beverage preparation machine, in particular providing a supply of ingredient such as water or another liquid or solid ingredient, or collecting waste material such as a residual beverage or used ingredient or a used cleaning/rinsing fluid. Normally, the module is removable from the machine, e.g. for normal servicing, e.g. refilling and/or emptying.

Typically, the body forms a main beverage processing unit, i.e. including the functional entities for processing the beverage, and the module is a secondary part of the machine, e.g. an accessory.

In accordance with the invention, the body connector and the module connector, when connected, are fixed together by a magnetic field-generating arrangement, e.g. a magnet arrangement, and a cooperating magnetic arrangement so as to fasten the module to the body.

The body connector and the module connector, when connected, can be fastened together only at the module connector that forms a foot of the module and that is mounted on the body connector that forms a platform of the body, the module having a generally upright elongated face that is adjacent to and faces the body and that is free from the body above the foot, such as a generally upright face that is spaced apart above the foot from the body in particular from a generally facing body face.

As discussed below, when the module connector is mounted on the body connector, the module may be supported by the body connector or it may merely be connected thereto without being supported. In particular, the module may be connected to the body connector but supported by an external surface, such as a table, without being supported by the body connector or by the machine's body itself.

The body of the machine and the module can fasten themselves together only by magnetic force when the body and module connectors are connected. Of course, external effects may contribute to the physical connection between the body and the module, such as gravity. However, in this particular embodiment, the machine (itself) only has magnetic means as a means to secure the body and module physically together. In other words, if the magnetic means were suppressed, the body and module would be exposed to falling apart during normal use of the machine, e.g. due to minor (handling) shocks or movements, such as vibrations, inflicted to the machine.

Typically, the magnetic field-generating arrangement comprises at least one of electromagnets and permanent magnets. The magnetic field-generating arrangement may comprise a plurality of magnets mounted in the body and/or in the module, in particular magnets that are bonded and/or force-fitted and/or screwed in corresponding arrangements of the body or the module.

The magnetic arrangement may be magnetised, i.e. creating itself a magnetic field, or non-magnetised.

In particular this magnetic arrangement may comprise at least one magnetized or non-magnetized magnetic element, in particular a ferromagnetic and/or ferrimagnetic element. The magnetic arrangement can comprise at least one magnetic element in the module and/or in the body cooperating with the magnetic field-generating arrangement, in particular magnets that are bonded and/or force-fitted and/or screwed in corresponding arrangements of the body or the module.

Such a magnet element generates a magnetic field. A suitable magnet element may be a permanent magnet, e.g. made of iron, nickel, cobalt, rare earth metals, e.g. lanthanide, and alloys and oxides containing such metals as well as polymers (e.g. plastics) carrying such elements and components. It is also possible to use an electromagnet as a magnet element.

A suitable ferromagnetic element may be made of at least one of Co, Fe, Fe₂O₃, FeOFe₂O₃, NiOFe₂O₃, CuOFe₂O₃, MgO Fe₂O₃, Nd₂Fe₁₄B, Mn, Bi, Ni, MnSb, MnOFe₂O3, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa and Co₂FeGe.

The body connector of the body of the machine can form a platform of the body, in particular a platform extending from a bottom part of the body. The module connector of the module may form a foot of the module that is mounted on the platform when the module and the body are fixed together. An upwardly oriented surface of the platform and a downwardly oriented surface of the foot may bear the cooperating magnetic field-generating arrangement and magnetic arrangement respectively or vice versa.

The module, in particular a foot of the module, may be supported by an external flat support surface, such as a table, on which the machine rests. In such a configuration, the module is directly supported by the external support surface and not by the body of the machine, in particular by the body connector or its platform, and is thus less exposed to vibrations generated by the body's machine during use and propagated along the body connector. Such a principle is explained in WO 2011/083103. The body connector may be allowed to be slightly displaceable vertically to magnetically connect with the module when the body and the module both rest on the same external flat support surface. Hence, in an advantageous embodiment for connecting the module and the body connector, the module is mounted on the body connector or its platform without being supported thereby.

The module can be upwardly elongated and mechanically secured to body only by magnetic force. For instance, the module has a height in the range of 1.5 to 5 times the size of an outermost (horizontal) diameter of the foot of the module. In particular, the module may have an upright face that is free from the body above the foot, such as an upright face that is separated from the body in particular from a generally facing body face.

By avoiding the multiplication of fastening arrangements between the body and the module, in particular by avoiding mechanical fastening arrangements such as hook systems, the geometry of the body and module is simplified, and maintenance thereof, in particular of the surfaces of the body and module is made more convenient due to the fact that such fastening mechanisms (and resulting geometrical obstacles, e.g. for cleaning) can be omitted. As a bonus, the resulting appearance may also be made smoother by avoiding visible fastening systems.

The platform (body connector of the body) can be made articulated in the body so that the module is movable into a plurality of different connected positions about the body. For example, when the module is operatively connected to the body via the articulated platform, the module is able to carry out the dedicated sub-function of the module for the beverage preparation machine, e.g. supplying an ingredient and/or collecting waste material, in a plurality of such different connected positions.

In other words, the body can be made up of two assembled parts, the platform and another part such as a part containing the main beverage processing functions (e.g. pump, thermal conditioner, ingredient mixing unit, control unit, and/or user-interface, etc. as known in the art of beverage machines).

In this embodiment, the beverage preparation machine may comprise a body and a module that is adjacent to the body and that is operatively connected to the body and movable along and about one or more peripheral outer faces of the body into different positions.

Typically, the outer faces of the body are side faces, e.g. front, rear and/or lateral faces, and/or a top face. By moving the module from a first location of a peripheral part of the body to a different location of such peripheral part, at least part of the space occupied by the module in the first position is freed.

Thus, the machine's outer shape, namely the overall shape of the body and the module connected thereto, in particular the footprint or plan view thereof, is changed. Therefore, the machine may be placed in a different spatial environment corresponding to the changed shape and use optimally the available space for placing the machine. For instance, when machine is placed in a corner, e.g. a kitchen corner, the body and module may be arranged in a configuration at an angle corresponding to the angle of the corner to match the shape of the corner. When the machine is placed along a straight wall, the body and module may be aligned so as to match the wall. Hence, depending on the relative position of the module and the body, the machine can take different outer configurations (shapes) that are adapted to different environments, e.g. the machine may be placed along a wall or in a left or right corner or along a straight wall of a room, in an optimal spatial arrangement of the machine in its environment. Thus, the machine may have an advantageous arrangement for adapting the machine's shape to match different spatial environments in which the machine is placed for normal use. For instance, the module may be translationally movable along the one or more outer body faces and/or rotatably movable around the body, in particular over a pivoting angle of at least 90°, such as up to 180°, optionally of at least 270° or 360°.

The machine may include a plurality of modules, e.g. two or three modules, operatively connected to the body adjacent to one or more outer body faces, each module being movable into a plurality of different operative connection positions along said one or more outer faces of the body. The modules may be connected simultaneously to the same body. The modules may be connected adjacent different faces of the body, in particular adjacent opposite lateral faces, or adjacent a lateral face and adjacent a rear face of the body. The modules of this plurality of modules may be of similar or different nature. For example, a liquid reservoir may be connected to the body as a first module and a waste material collector may be connected to the body as a second module.

In one embodiment, the module is connected to the body by the body connector (platform), such as a rigid connector. The body connector may include a communication channel extending in the body to the module. The communication channel can be configured to guide a material, such as a fluid e.g. a liquid, and/or a flow or energy, such as information and/or power, between the body and the module. The channel may be connected to the body by a flexible connector, such as a flexible cable and/or a flexible tube. The channel can be connected to the body by a rigid electric and/or fluid connection with a bearing.

When the machine includes a plurality of modules, each module may be connected to the body by a dedicated module connector, such as a rigid connector. It is also possible to provide a rigid connector that is arranged for connecting more than one module to the body, e.g. two or three modules.

The platform can have a bearing portion movably assembled to the body, such as a portion pivotally and/or translationally mounted in the body, and a connecting portion for mounting the foot thereon. For instance, the bearing portion and the connecting portion are joined together by an arm.

Typically, the machine has a further (usually disconnectable) connection arrangement between the module and the body. Such a further connection can be used to establish a communication channel between the module and the body, e.g. to communicate data, energy and/or substances therebetween. The further connection arrangement is usually not used or not necessary to physically fasten the module to the body but may be used, this function being preferably being taken care of by the magnetic fastening.

The magnetic field-generating arrangement and the cooperating magnetic arrangement can be located adjacent to and/or around the further connection arrangement.

Providing, the magnetic fastening arrangement around the further connection arrangement may assist in improving the stability of the further connection.

At least one of the magnetic field-generating arrangement and the cooperating magnetic arrangement may form: a ring around the further connection arrangement, in particular a closed ring; or a plurality of discrete elements that are arranged around said further connection arrangement, in particular a plurality of elements spaced apart therearound.

For example, the further connection arrangement is a fluidic connection comprising a body fluid connector and a module fluid connector that are in fluid communication when the body connector and the module connector are magnetically fixed together. At least one of the body and module fluid connectors may comprise a valve that interrupts the fluid communication when the body fluid connector and the module fluid connector are disconnected.

The body fluid connector can lead into a fluid conduit that is connected to at least one of: a pump for driving a fluid in the conduit; a thermal conditioner, such as a heater and/or a cooler; and a unit for mixing a plurality of beverage ingredients, in particular ingredients that include a fresh ingredient fed from the module or a ingredient collected in the module upon use.

The body may include a pump for circulating liquid from a source of liquid, e.g. from the module, to the beverage outlet. The pump may be a reciprocating piston pump or a rotary pump. The body can include a thermal conditioner, e.g. a heater, for thermal conditioning of liquid from a liquid source circulated to the beverage outlet. In particular, the machine's body contains a mixing unit for mixing beverage ingredients, in particular a flavouring ingredient, e.g. coffee and/or tea and/or cacao and/or milk, and a liquid such as water. The mixing unit may be a brewing unit for brewing an ingredient.

As indicated above, the module may comprise a collection reservoir for collecting waste material, such as waste beverage and/or ingredients upon use and/or a cleaning fluid. Conversely, the module can be a supply reservoir for supplying an ingredient, in particular a liquid such as water, to the body via the connection device.

For instance, the machine is configured for the preparation a coffee, tea, chocolate, milk, soup, baby food, etc..., such as a self-contained table-top machine that can be electrically connected to the mains, e.g. at home or in an office. In particular, the machine is arranged for a beverage by passing hot or cold water or another liquid through a capsule containing a flavouring ingredient of the beverage to be prepared, such as ground coffee or tea or chocolate or cacao or milk powder.

For example, the preparation machine comprises: an ingredient processing arrangement including one or more of a liquid reservoir, e.g. the above module, liquid circulation circuit, a heater, a pump and a mixing unit, e.g. a brewing unit, arranged to receive ingredient capsules for extraction and evacuate capsules upon extraction; a seat to which capsules are evacuated from the preparation unit; and a receptacle having a cavity forming a storage space for collecting used ingredient. The receptacle is insertable into the seat for collecting capsules and is removable from the seat for emptying the collected capsules. Examples of such ingredient processing arrangements are disclosed in WO 2009/074550, WO 2009/130099 and WO 2010/015427.

The beverage machine may include one or more of the following components:
a) a brewing unit for receiving an ingredient of this beverage, in particular a pre-portioned ingredient supplied within a capsule, and for guiding an incoming flow of liquid, such as water, through said ingredient to a beverage outlet;
b) an in-line heater, such as a thermoblock, for heating this flow of liquid to be supplied to the brewing unit;
c) a pump for pumping this liquid through the in-line heater;
d) one or more fluid connecting members for guiding this liquid from a source of liquid, such as a tank of liquid, to the beverage outlet;
e) an electric control unit, in particular comprising a printed circuit board (PCB), for receiving instructions from a user via an interface and for controlling the in-line heater and the pump; and
f) one or more electric sensors for sensing at least one operational **characteristic** selected from characteristics of the brewing unit, the in-line heater, the pump, a liquid reservoir, an ingredient collector, a flow of this liquid, a pressure of this liquid and a temperature of this liquid, and for communicating such characteristic(s) to the control unit.

### Brief Description of the Drawings

The invention will now be described with reference to the schematic drawings, wherein:
- Figures 1 to 3 illustrate a beverage preparation machine of the type having a body connected to a removable module by connectors in accordance with the invention, Figure 1 showing the body and its connector without the corresponding module; and
- Figures 4 and 5 illustrate another module and connection to a body according to the invention.

### Detailed description

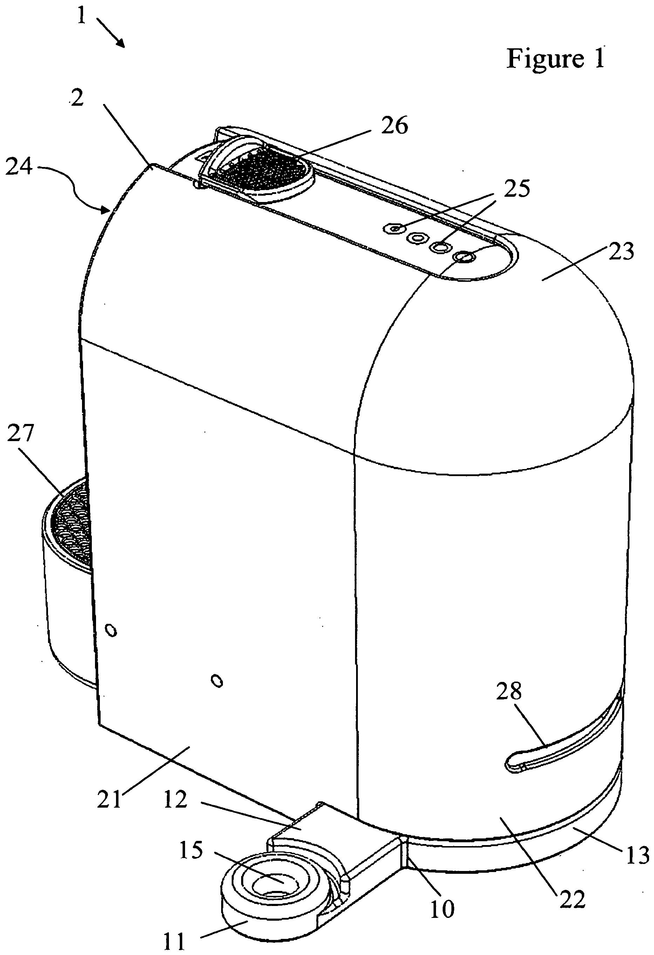

Figures 1 to 3 illustrate an embodiment of a beverage preparation machine 1 and parts thereof according to the invention, in particular a machine for preparing a beverage by circulating a liquid via a flavouring ingredient, e.g. tea or ground coffee, such as a pre-portioned ingredient contained in a capsule.

A beverage preparation machine of this type is described in greater details in WO 2009/043630 and in WO 2010/015427.

Machine 1 has a main body 2 and a module 3 connected thereto. Body 2 has a front face 24 bearing a beverage outlet (not shown) for dispensing a beverage onto a beverage dispensing area 27, e.g. a cup or mug support. Such support is known in the art, e.g. as disclosed in EP 1 867 260. Machine 1 has facing lateral outer faces 21, a semi-circular rear outer face 22 and a semi-circular top face 23. Rear outer face 22 may bear one or more openings 28, e.g. a generally annularly extending opening 28, for air circulation between the inside and the outside of body 2.

Top face 23 bears a user-interface 25 for a user to operate machine 1 and an ingredient inlet channel (not shown) for introducing a flavouring ingredient, in particular supplied within a capsule, into the machine. The channel may cooperate with a gate 26, e.g. a slidable gate 26, for opening and closing the channel.

Machine 1 has a module 3 (operatively) connected to body 2 adjacent to one of the module's outer faces 21,22. Module 3 is movable into a plurality of different operative connection positions along lateral faces 21 and rear face 22. Module 3 is connected to body 2 via a disconnectable connector 10 of body.

Module 3 has a corresponding disconnectable module connector 34 for removably connecting module 3 to body 2 via body connector 10.

In accordance with the invention, body connector 10 and module connector 34, when connected, are:
- fixed together by a magnetic field-generating arrangement and a cooperating magnetic arrangement so as to fasten module 3 to body 2; and/or
- fastened together only at body connector 34 that forms a foot 34 of module 3 and that is mounted on body connector 10 that forms a platform of body 2, module 3 having a generally upright elongated face 33 that is adjacent to and faces body 2 and that is free from body 2 above foot 34, such as a generally upright face 33 that is spaced apart from body 2 in particular from a generally facing body face 21,22.

For instance, body 2 and module 3 are fastened together only by magnetic force. Nevertheless, further disconnectable connectors 15,35 may be provided between body 2 and module 3, such as fluidic connectors 15,35, energy connectors or data connectors. However, in this particular embodiment of the invention, such further connectors, i.e. non-magnetic connectors, are not used to fasten body 2 and module 3 together. In other words, if the magnetic forces were removed, body 2 and module 3 would not be fastened together and thus not assembled in a stable manner, i.e. the remaining connectors would not be sufficient to maintain body and module physically together when exposed to adverse ordinary forces, e.g. ordinary shocks, to which the body and module may be exposed during normal use of the machine.

Alternatively, one or more further connectors may be provided to fasten the module to the body, e.g. mechanical connectors or further magnetic connectors. For instance, an upper part of the module may bear an upper magnet (not shown) radially extending towards the body that comprises at the level of this upper magnet a magnetic element so that the body and the module are urged together at such an upper location as well for further stabilisation. However, such an upper magnet is not necessary when a magnetic arrangement providing a sufficient attraction force is provided in body and module connectors 10,34.

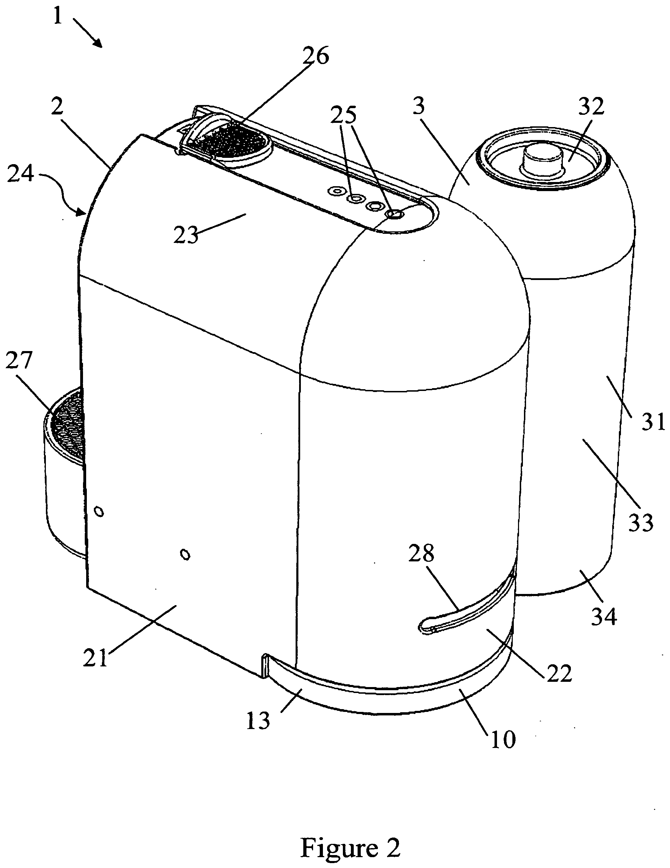

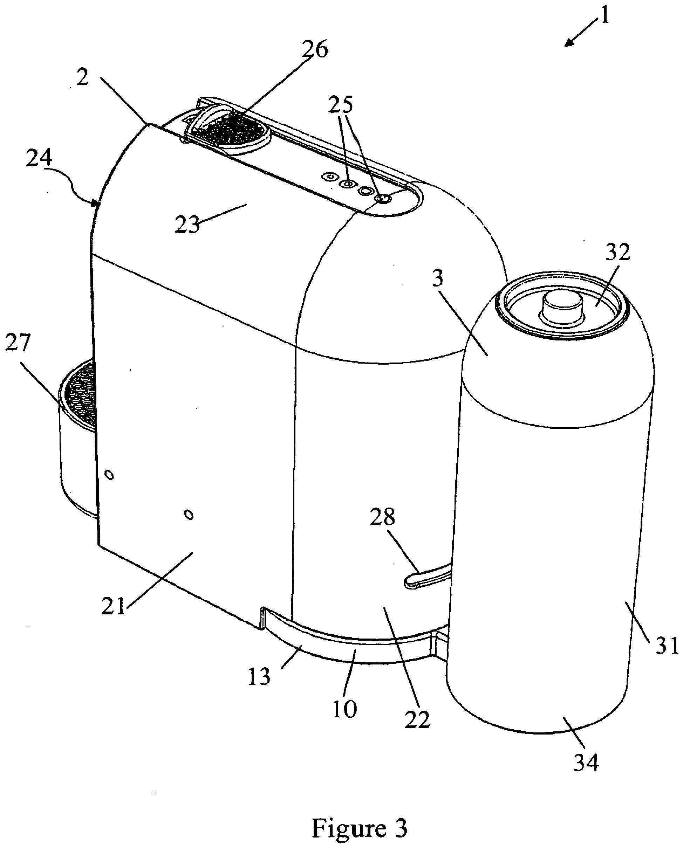

Fig. 1 illustrates body 2 of machine 1 with a body connector 10 in position for connection to module 3 (not shown in Fig. 1) adjacent to right-hand lateral face 21. Fig. 2 shows machine 1 with connector 10 of body 2 in position for positioning module 3 adjacent to left-hand lateral face (facing lateral face 21). Fig. 3 illustrates machine 1 with connector 10 of body 2 in position for positioning module 3 adjacent to rear face 22.

Module 3 is rotatably movable around lateral face 21 and rear face 22 of body 2 over a pivoting angle of about 180° from one side to the opposite side of body 2. Alternatively, the module could be translationally mounted along the bodie's faces.

As illustrated in Figs 1 to 3, module is movable into a plurality of different positions of (operative) connection adjacent and along faces 21,22. Body 2 has a first body face 21 and a second body face 22, module 3 being movable into a first position of operative connection adjacent to first body face 21 (Fig. 1) and into a second position of operative connection adjacent to second body face 22 (Fig. 3). Moreover, body 2 has a third body face opposite first body face 21, module 3 being movable into a third position of operative connection adjacent to the third body face (Fig. 2).

Module 3 is movable into an infinite number of different positions of operative connection from adjacent first body face 21 over second body face 22 to the third body face opposite first face 21. Alternatively, module 3 could be movable into a limited number of different positions, e.g. exclusively the positions shown in Figs 1 to 3, namely 3 positions.

Module 3 has a module face 33 generally noncontacting body faces 21,22 in said plurality of different positions of operative connection. The module's face could be parallel the body's face(s), e.g. when module and body have flat faces or concentrically arranged faces.

Module 3 is connected to body 2 by a rigid connector 10 of body 2. Connector 10 has a pivotable bearing portion 13 assembled to body 2, a connection portion 11 for module 3 and an arm 12 extending therebetween.

For example connection portion 11 comprises a core of non-magnetised magnetic material, e.g. iron, covered with a food-grade coating. Module 3 has a foot 34 bearing a series of magnets concentrically arranged over connection portion 11 to urge module 3 onto portion 11. Alternatively, the core may be made of magnetised magnetic material, e.g. a permanent magnet or an electromagnet to increase the magnetic attraction force between foot 34 and portion 11.

Body connector 10 includes a fluid connector 15 for providing a fluidic connection between body 2 and module 3. For instance, fluid connector 15 is located in connection portion 11 and is configured to guide a liquid between module 3 and body 2 typically via a conduit, e.g. a flexible conduit, that extends through a passage 16 in connector 10 to a fluid circuit inside body 2.

Typically, module 3 comprises a supply reservoir 31 with a lid 32 for supplying an ingredient, in particular a liquid such as water, to body 2 via fluid connector 15 of connector 10. The module could also be arranged for collecting waste material from the machine's body.

Module 3 is vertically elongated and delimited by a generally circular face 33 having a tapered top part with an opening covered by lid 32.

In another embodiment, the module can be a milk frothing device, e.g. of the type disclosed in WO 2008/142154, WO 2010/023312 and WO 2010/023313, which is fed with energy and/or steam via corresponding channel(s) in the connector.

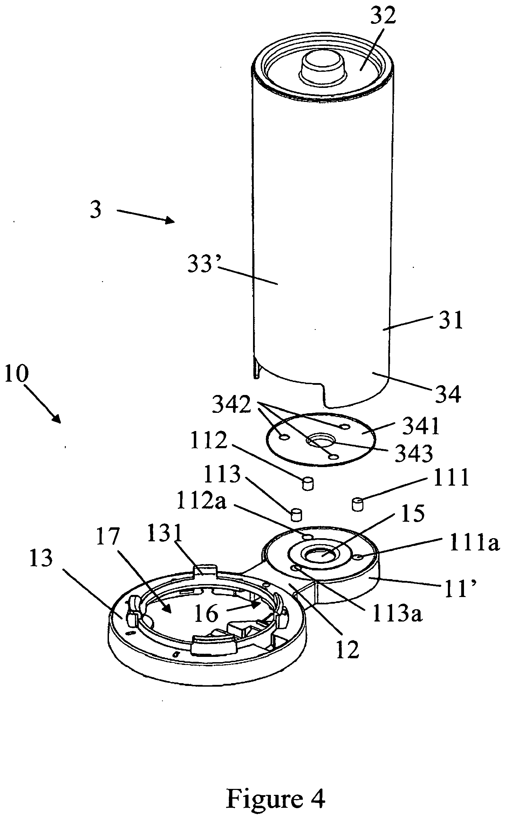

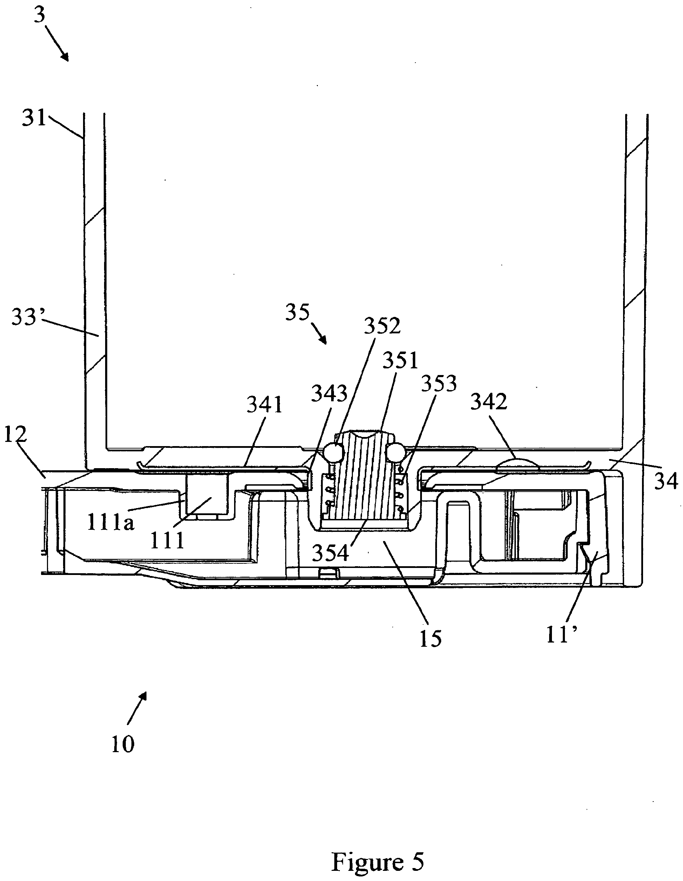

Figure 4 (exploded perspective view) and Figure 5 (cross-sectional view), in which the same references generally designate the same elements, illustrate another embodiment of module 3 and its connection to body 2 via connector 10.

In this embodiment, module 3, e.g. a water reservoir 31, is vertically elongated and has a generally circular face 33' that is upright from foot 34 to lid 32.

The height of faces 33, 33' may be in the range of 1.5 to 5 times the diameter of generally circular face 33, 33'. Even without upper fastening, e.g. via an upper magnet as discussed above, such a module 3 may be fastened in a stable manner to body connector 10 by appropriate magnets 111,112,113 in body connector 10 and magnetic element 341 in module connector or foot 34.

It follows that module 3 may have an upright face 33' that is free from body 2 above foot 34. Upright face 33' is separated and spaced apart from body 2 in particular from generally facing body faces 21,22.

Hence, in accordance with the invention body connector 10 and module connector 34, when connected, are:
- fixed together by a magnetic field-generating arrangement 111,112,113 and a cooperating magnetic arrangement 341 so as to fasten the module to the body; and/or
- fastened together only at body connector 34 that forms a foot 34 of module 3 and that is mounted on body connector 10 that forms a platform of body 2, module 3 having a generally upright elongated face 33, 33' that is adjacent to and faces body 2 and that is free from body 3 above foot 34, such as a generally upright face that is spaced apart from body 2 in particular from a generally facing body face 21,22.

Body 2 and module 3 can be fastened or fixed together only by magnetic force (leaving aside any effects external to machine 1, such as gravity).

For instance, magnets 111,112,113 are permanent magnets glued into corresponding recesses 111a, 112a, 113a in the upwardly oriented face of part 11' of body connector 10. Magnetic element 341 may be annularly shaped and/or glued at anchorage protrusions 342 into the downwardly oriented face of foot 34 of module 3 so that element 341 contacts or at least comes very close to the magnetic field-generating arrangement 111,112,113 when module 3 and body 2 are connected together.

Magnetic element 341 may be non-magnetised. Alternatively, it is possible to provide a magnetised magnetic element.

Body connector 10 forms a platform of body 2, in particular a platform extending from a bottom part of body 2. Module connector 34 forms a foot of module 3 that is mounted on part 11 of platform 10 when module 3 and body 2 are fixed together.

Platform 10 can be articulated in body 2 so that the module 3 is movable into a plurality of different connected positions about the body, similarly to the different configurations illustrated in Figs 1 to 3.

Platform 10 has a bearing portion 13 movably assembled to the body 2, such as a portion 13 pivotally mounted body 2, and a connecting portion 11' for mounting foot 34 thereon. Bearing portion 13 and connecting portion 11' are in particular joined together by a rigid arm 12. Bearing portion 13 has an annular shape with a through opening 17. Resilient hooks 131 are provided on bearing portion 13 for cooperating with a groove in a bottom face of body 2 to secure bearing portion 13 in body 2 via hooks 131.

Module 3, in particular a foot of the module, may be supported directly by an external flat support surface, such as a table, on which machine 1 rests. In such a configuration, module 3 does not need to be supported by body 2 of machine 1, in particular by body connector 10 or its platform. Module 3 is thus less exposed to vibrations generated by the body's machine 2 during use and propagated along body connector 10. Such a principle is explained in WO 2011/083103. Body connector 10 may be configured to be slightly displaceable vertically to magnetically connect with module 3 when body 2 and module 3 both rest on the same external flat support surface.

T h e magnetic field-generating arrangement 111,112,113 and magnetic arrangement 341 are located adjacent to and around a further connection arrangement 15,35. Magnetic arrangement 341 forms a ring around further connection arrangement 15,35, in particular a closed ring. As illustrated, a through-opening 343 is provided in arrangement 341 for the passage of connecting arrangement 15,35. Magnetic field-generating arrangement is formed by a plurality of discrete elements 111,112,113 that are arranged around further connection arrangement 15,35, in particular a plurality of elements spaced apart around arrangement 15,35.

Such further connection arrangement 15,35 can be a fluidic connection comprising a body fluid connector 15 and a module fluid connector 35 that are in fluid communication when body connector 10 and module connector 34 are magnetically fixed together.

Module fluid connector 35 may include a valve 351,352,353,354 that interrupts the fluid communication when body fluid connector 15 and a module fluid connector 35 are disconnected. For instance, this valve comprises a gate 351 with a fluid tight seal 352. Gate 351, e.g. a generally cylindrical body, is urged by a spring 353 in the closed position in which seal 352 prevents passage of any fluid from reservoir 31 along gate 351. Gate 351 can be forced against spring 353 into an open position by pushing against face 354, e.g. by a counter-element (not illustrated) in body fluid connector 15.

Body fluid connector 15 leads into a fluid conduit (not shown) that extends along a passage 16 in body connector 10. This fluid conduit can be connected to at least one of: a pump for driving a fluid in the conduit; a thermal conditioner, such as a heater and/or a cooler; and a unit for mixing a plurality of beverage ingredients, in particular ingredients that include a fresh ingredient fed from the module 3, e.g. water.

In the embodiments of Figs 1 to 5, body 2 of beverage preparation machine 1 typically includes one or more of the following components:
a) an ingredient holder, such as a brewing unit, for receiving a flavouring ingredient of this beverage, in particular a pre-portioned ingredient supplied within a capsule, and for guiding an incoming flow of liquid, such as water, through this ingredient to the beverage outlet;
b) an in-line heater, such as a thermoblock, for heating this flow of liquid to be supplied to the ingredient holder;
c) a pump for pumping liquid through the in-line heater;
d) one or more fluid connecting members for guiding liquid from a source of liquid, such as tank of liquid, to the beverage outlet;
e) an electric control unit, in particular comprising a printed circuit board (PCB), for receiving instructions from a user via an interface and for controlling the in-line heater and the pump; and
f) one or more electric sensors for sensing at least one operational characteristic selected from characteristics of the ingredient holder, the in-line heater, the pump, liquid reservoir, service device, a flow of liquid, a pressure of liquid and a temperature of liquid, and for communicating such characteristic(s) to the control unit.

The heater may be a boiler, thermoblock or an on demand heater (ODH), for instance an ODH type disclosed in EP 1 253 844, EP 1 380 243 and EP 1 809 151. Examples of suitable brewing units and capsule management are for example disclosed in WO 2005/004683, WO2007/135136 and WO 2009/043630, which are hereby incorporated by way of reference. Suitable beverage preparation modules are for instance disclosed in WO 2009/074550 and WO 2009/130099, which are hereby incorporated by way of reference.

## Claims

1. A beverage preparation machine (1) comprising:
- a body (2) having a body connector (10) and a beverage outlet for dispensing a beverage over a beverage dispensing area (27); and
- a module (3) having a disconnectable module connector (34) for removably connecting the module to the body via the body connector, the module (3) comprising a collection reservoir for collecting waste material or a supply reservoir for supplying an ingredient,
**characterised in that** the body connector (10) and the module connector (34), when connected, are fixed together by a magnetic field-generating arrangement, such as one or more magnets (111,112,113), and a cooperating magnetic arrangement (341) so as to fasten the module to the body.

2. The machine of claim 1, wherein the body connector (10) and the module connector (34) are fastened together only at the module connector (34) that forms a foot (34) of the module (3) and that is mounted on the body connector (10) that forms a platform of the body (2), the module having a generally upright elongated face (33,33') that is adjacent to and faces the body and that is free from the body above the foot, such as a generally upright face that is spaced apart from the body in particular from a generally facing body face (21,22).

3. The machine of claim 1 or 2, wherein the body (2) and the module (3) fasten themselves together only by magnetic force when the body and module connectors (10,34) are connected.

4. The machine of any preceding claim, wherein the magnetic field-generating arrangement (111,112,113) comprises:
- at least one of electromagnets and permanent magnets; and/or
- a plurality of magnets mounted in the body (2) and/or in the module, in particular magnets that are bonded and/or force-fitted and/or screwed in corresponding arrangements (111a, 112a, 113a) of the body or the module.

5. The machine of any preceding claim, wherein the magnetic arrangement (341) comprises:
- at least one magnetised or non-magnetized magnetic element, in particular a ferromagnetic and/or ferrimagnetic element; and/or
- at least one magnetic element in the module (3) and/or in the body cooperating with the magnetic field-generating arrangement, in particular magnets that are bonded and/or force-fitted and/or screwed in corresponding arrangements (111a, 112a, 113a) of the body or the module.

6. The machine of any preceding claim, wherein the body connector (10) forms a platform of the body (2), in particular a platform extending from a bottom part of the body, and the module connector (34) forms a foot of the module (3) that is mounted on the platform when the module (3) and the body (2) are fixed together, optionally an upwardly oriented surface of the platform (10) and a downwardly oriented surface of the foot (34) bearing the cooperating magnetic field-generating arrangement (111,112,113) and magnetic arrangement (341) respectively or vice versa.

7. The machine of claim 6, wherein the module (3) is upwardly elongated and mechanically secured to body (2) only by magnetic force.

8. The machine of claim 6 or 7, wherein the module (3) has an upright face (33, 33') that is free from the body (2) above the foot (34), such as an upright face that is separated from the body in particular from a generally facing body face (21,22).

9. The machine of any one of claims 6 to 8, wherein the platform (10) is articulated in the body (2) so that the module (3) is movable into a plurality of different connected positions about the body, optionally the platform (10) having a bearing portion (13) movably assembled to the body (2), such as a portion pivotally and/or translationally mounted in the body, and a connecting portion (11, 11') for mounting the foot (34) thereon, the bearing portion and the connecting portion being in particular joined together by an arm (12).

10. The machine of any preceding claim, wherein the module (3), in particular the foot (34), and the body (2) are arranged to be supported during use by an external flat surface, such as an upper surface of a table, so that the module (3) is not supported by the body or the body connector (10) during use.

11. The machine of any preceding claim, wherein the magnetic field-generating arrangement (111,112,113) and the cooperating magnetic arrangement (341) are located adjacent to and/or around a further connection arrangement (15,35).

12. The machine of claim 11, wherein said further connection arrangement (15,35) is between the module and the body and establishes a communication channel between the module and the body, e.g. to communicate data, energy and/or substances therebetween.

13. The machine of claim 11 or 12, wherein at least one of the magnetic field-generating arrangement and the cooperating magnetic arrangement (341) forms:
- a ring around said further connection arrangement (15,35), in particular a closed ring; or
- a plurality of discrete elements (111,112,113) that are arranged around said further connection arrangement (15,35), in particular a plurality of elements spaced apart therearound.

14. The machine of any one of claims 11 to 13, wherein said further connection arrangement is a fluidic connection comprising a body fluid connector (15) and a module fluid connector (35) that are in fluid communication when the body connector (10) and the module connector (34) are magnetically fixed together, optionally at least one of the body and module fluid connectors (15,35) comprises a valve (351,352,353,354) that interrupts the fluid communication when the body fluid connector (15) and the module fluid connector (35) are disconnected.

15. The machine of any preceding claim, wherein the body fluid connector (15) leads into a fluid conduit that is connected to at least one of:
- a pump for driving a fluid in the conduit;
- a thermal conditioner, such as a heater and/or a cooler; and
- a unit for mixing a plurality of beverage ingredients, in particular ingredients that include a fresh ingredient fed from the module (3) or an ingredient collected in the module upon use.

## Patentansprüche

1. Getränkezubereitungsmaschine (1), umfassend:
- ein Körper (2) mit einem Körperverbinder (10) und einem Getränkeauslass zur Abgabe eines Getränks über einen Getränkeabgabebereich (27); und
- ein Modul (3) mit einem trennbaren Modulverbinder (34) zum lösbaren Verbinden des Moduls mit dem Körper über den Körperverbinder, wobei das Modul (3) einen Sammelbehälter zum Sammeln von Abfallmaterial oder einen Vorratsbehälter zum Bereitstellen einer Zutat umfasst,
**dadurch gekennzeichnet, dass** der Körperverbinder (10) und der Modulverbinder (34), wenn verbunden, durch eine ein Magnetfeld erzeugende Anordnung, wie einen oder mehrere Magneten (111, 112, 113), und eine zusammenwirkende magnetische Anordnung (341) miteinander verbunden sind, um das Modul am Körper zu befestigen.

2. Maschine nach Anspruch 1, wobei der Körper verbinder (10) und der Modulverbinder (34) nur am Modulverbinder (34) miteinander verbunden sind, der einen Fuß (34) des Moduls (3) bildet und am Körper verbinder (10) angebracht ist, der eine Plattform des Körpers (2) bildet, wobei das Modul eine im Allgemeinen senkrechte längliche Fläche (33, 33') aufweist, die an den Körper angrenzt und dem Körper zugewandt ist und über dem Fuß frei vom Körper ist, wie eine im Allgemeinen senkrechte Fläche, die vom Körper, insbesondere von einer im Allgemeinen zugewandten Körperfläche (21, 22), beabstandet ist.

3. Maschine nach Anspruch 1 oder 2, wobei der Körper (2) und das Modul (3) sich nur durch Magnetkraft miteinander verbinden, wenn der Körper- und der Modulverbinder (10, 34) miteinander verbunden sind.

4. Maschine nach einem der vorstehenden Ansprüche, wobei die ein Magnetfeld erzeugende Anordnung (111, 112, 113) umfasst:
- mindestens einen von Elektromagneten und/oder Permanentmagneten und/oder
- eine Vielzahl von im Körper (2) und/oder im Modul angebrachten Magneten, insbesondere Magneten, die in entsprechende Anordnungen (111 a, 112a, 113a) des Körpers oder des Moduls eingeklebt und/oder eingepresst und/oder eingeschraubt sind.

5. Maschine nach einem der vorstehenden Ansprüche, wobei die magnetische Anordnung (341) umfasst:
- mindestens ein magnetisiertes oder nicht magnetisiertes Magnetelement, insbesondere ein ferromagnetisches und/oder ferrimagnetisches Element und/oder
- mindestens ein Magnetelement im Modul (3) und/oder im Körper, das mit der ein Magnetfeld erzeugenden Anordnung zusammenwirkt, insbesondere Magneten, die in entsprechende Anordnungen (111 a, 112a, 113a) des Körpers oder des Moduls eingeklebt und/oder eingepresst und/oder eingeschraubt sind.

6. Maschine nach einem der vorstehenden Ansprüche, wobei der Körperverbinder (10) eine Plattform des Körpers (2), insbesondere eine von einem unteren Teil des Körpers aus verlaufende Plattform, bildet und der Modulverbinder (34) einen Fuß des Moduls (3) bildet, der an der Plattform angebracht wird, wenn das Modul (3) und der Körper (2) miteinander verbunden werden, wobei optional eine nach oben gerichtete Oberfläche der Plattform (10) und eine nach unten gerichtete Oberfläche des Fußes (34) jeweils die zusammenwirkende, ein Magnetfeld erzeugende Anordnung (111, 112, 113) und die magnetische Anordnung (341) tragen oder umgekehrt.

7. Maschine nach Anspruch 6, wobei das Modul (3) nach oben verlängert ist und nur durch Magnetkraft mechanisch am Körper (2) fixiert wird.

8. Maschine nach Anspruch 6 oder 7, wobei das Modul (3) eine senkrechte Fläche (33, 33') aufweist, die oberhalb des Fußes (34) frei vom Körper (2) ist, wie eine senkrechte Fläche, die vom Körper, insbesondere von einer im Allgemeinen zugewandten Körperfläche (21, 22) getrennt ist.

9. Maschine nach einem der Ansprüche 6 bis 8, wobei die Plattform (10) im Körper (2) beweglich ist, so dass das Modul (3) in eine Vielzahl unterschiedlicher verbundener Positionen um den Körper herum bewegt werden kann, wobei die Plattform optional (10) einen am Körper (2) beweglich montierten Trageabschnitt (13), wie einen schwenkbar und/oder verschiebbar im Körper angebrachten Abschnitt, und einen Verbindungsabschnitt (11,11') zum Anbringen des Fußes (34) daran aufweist, wobei der Trageabschnitt und der Verbindungsabschnitt insbesondere durch einen Arm (12) miteinander verbunden sind.

10. Maschine nach einem der vorstehenden Ansprüche, wobei das Modul (3), insbesondere der Fuß (34), und der Körper (2), so angeordnet sind, dass sie bei der Anwendung von einer externen flachen Oberfläche, wie einer oberen Oberfläche eines Tisches, getragen werden, so dass das Modul (3) bei der Anwendung nicht vom Körper oder dem Körperverbinder (10) getragen wird.

11. Maschine nach einem der vorstehenden Ansprüche, wobei die ein Magnetfeld erzeugende Anordnung (111, 112, 113) und die zusammenwirkende magnetische Anordnung (341) angrenzend an und/oder um eine weitere Verbindungsanordnung (15, 35) herum angeordnet sind.

12. Maschine nach Anspruch 11, wobei die weitere Verbindungsanordnung (15, 35) zwischen dem Modul und dem Körper liegt und einen Übertragungskanal zwischen dem Modul und dem Körper herstellt, z. B. um Daten, Energie und/oder Substanzen zwischen diesen zu übertragen.

13. Maschine nach Anspruch 11 oder 12, wobei mindestens eine der ein Magnetfeld erzeugenden Anordnung und der zusammenwirkenden magnetischen Anordnung (341) Folgendes bildet:
- einen Ring um die genannte weitere Verbindungsanordnung (15, 35) herum, insbesondere einen geschlossenen Ring, oder
- eine Vielzahl einzelner Elemente (111, 112, 113), die um die weitere genannte Verbindungsanordnung (15, 35) herum angeordnet sind, insbesondere eine Vielzahl von Elementen, die um diese herum beanstandet sind.

14. Maschine nach einem der Ansprüche 11 bis 13, wobei die genannte weitere Verbindungsanordnung eine Fluidverbindung ist, die einen Körper-Flüssigkeitsanschluss (15) und einen Modul-Flüssigkeitsanschluss (35) umfasst, die in Fluidverbindung stehen, wenn der Körperverbinder (10) und der Modulverbinder (34) magnetisch miteinander verbunden sind, wobei wahlweise mindestens einer der Flüssigkeitsanschlüsse des Körper s und des Moduls (15, 35) ein Ventil (351, 352, 353, 354) umfasst, das die Fluidverbindung unterbricht, wenn der Körper-Flüssigkeitsanschluss (15) und der Modul-Flüssigkeitsanschluss (35) getrennt werden.

15. Maschine nach einem der vorstehenden Ansprüche, wobei der Körper-Flüssigkeitsanschluss (15) in eine Flüssigkeitsleitung führt, die mindestens mit einem der folgenden Elemente verbunden ist:
- einer Pumpe zum Einbringen einer Flüssigkeit in die Leitung;
- einer thermischen Konditionierungseinrichtung, wie einer Heizvorrichtung und/oder einer Kühlvorrichtung, und
- einer Einheit zum Mischen einer Vielzahl von Zutaten, insbesondere Zutaten, die eine vom Modul (3) zugeführte frische Zutat oder eine bei der Anwendung im Modul gesammelte Zutat umfassen.

## Revendications

1. Machine de préparation de boisson (1) comprenant :
- un corps (2) possédant un connecteur de corps (10) et une sortie de boisson pour distribuer une boisson au-dessus d'une zone de distribution de boisson (27) ; et
- un module (3) possédant un connecteur de module déconnectable (34) pour connecter de façon amovible le module au corps par l'intermédiaire du connecteur de corps, le module (3) comprenant un réservoir de recueil pour recueillir les déchets ou un réservoir d'alimentation pour fournir un ingrédient,
**caractérisé en ce que** le connecteur de corps (10) et le connecteur de module (34), lorsqu'ils sont connectés, sont fixés ensemble par un agencement générant un champ magnétique, tel qu'un ou plusieurs aimants (111, 112, 113), et un agencement magnétique coopérant (341) de façon à fixer le module au corps.

2. Machine selon la revendication 1, dans laquelle le connecteur de corps (10) et le connecteur de module (34) sont fixés ensemble uniquement au niveau du connecteur de module (34) qui forme un pied (34) du module (3) et qui est monté sur le connecteur de corps (10) qui forme une plate-forme du corps (2), le module possédant une face allongée généralement dressée (33, 33') qui est adjacente, et fait face, au corps et qui est libre du corps au-dessus du pied, telle qu'une face généralement dressée qui est espacée du corps, en particulier d'une face de corps faisant généralement face (21, 22).

3. Machine selon la revendication 1 ou 2, dans laquelle le corps (2) et le module (3) se fixent ensemble uniquement par une force magnétique lorsque le corps et les connecteurs de module (10, 34) sont connectés.

4. Machine selon l'une quelconque des revendications précédentes, dans laquelle l'agencement générant un champ magnétique (111, 112, 113) comprend :
- au moins l'un parmi des électro-aimants et des aimants permanents ; et/ou
- une pluralité d'aimants montés dans le corps (2) et/ou dans le module, en particulier des aimants qui sont liés et/ou engagés de force et/ou vissés dans des agencements correspondants (111 a, 112a, 113a) du corps ou du module.

5. Machine selon l'une quelconque des revendications précédentes, dans laquelle l'agencement magnétique (341) comprend :
- au moins un élément magnétique magnétisé ou non magnétisé, en particulier un élément ferromagnétique et/ou ferrimagnétique ; et/ou
- au moins un élément magnétique dans le module (3) et/ou dans le corps coopérant avec l'agencement générant un champ magnétique, en particulier des aimants qui sont liés et/ou engagés de force et/ou vissés dans des agencements correspondants (111 a, 112a, 113a) du corps ou du module.

6. Machine selon l'une quelconque des revendications précédentes, dans laquelle le connecteur de corps (10) forme une plate-forme du corps (2), en particulier une plate-forme s'étendant à partir d'une partie inférieure du corps, et le connecteur de module (34) forme un pied du module (3) qui est monté sur la plate-forme lorsque le module (3) et le corps (2) sont fixés ensemble, facultativement une surface orientée vers le haut de la plate-forme (10) et une surface orientée vers le bas du pied (34) portant l'agencement générant un champ magnétique (111, 112, 113) et l'agencement magnétique (341) coopérants, respectivement ou vice-versa.

7. Machine selon la revendication 6, dans laquelle le module (3) est allongé vers le haut et fixé mécaniquement au corps (2) uniquement par la force magnétique.

8. Machine selon la revendication 6 ou 7, dans laquelle le module (3) a une face dressée (33, 33') qui est libre du corps (2) au-dessus du pied (34), telle qu'une face dressée qui est séparée du corps en particulier d'une face de corps faisant généralement face (21, 22).

9. Machine selon l'une quelconque des revendications 6 à 8, dans laquelle la plate-forme (10) est articulée dans le corps (2) de sorte que le module (3) peut être déplacé dans une pluralité de positions connectées différentes autour du corps, facultativement la plate-forme (10) possédant une partie de palier (13) assemblée de manière mobile au corps (2), telle qu'une partie montée de façon pivotante et/ou translationnelle dans le corps, et une partie de connexion (11, 11') pour monter le pied (34) sur celle-ci, la partie de palier et la partie de connexion étant, en particulier, jointes ensemble par un bras (12).

10. Machine selon l'une quelconque des revendications précédentes, dans laquelle le module (3), en particulier le pied (34), et le corps (2) sont agencés pour être soutenus pendant l'utilisation par une surface plane externe, telle qu'une surface supérieure d'une table, de sorte que le module (3) n'est pas soutenu par le corps ou le connecteur de corps (10) pendant l'utilisation.

11. Machine selon l'une quelconque des revendications précédentes, dans laquelle l'agencement générant un champ magnétique (111, 112, 113) et l'agencement magnétique coopérant (341) sont situés adjacents à et/ou autour d'un agencement de connexion supplémentaire (15, 35).

12. Machine selon la revendication 11, dans laquelle ledit agencement de connexion supplémentaire (15, 35) se trouve entre le module et le corps et établit un canal de communication entre le module et le corps, par exemple, pour communiquer des données, de l'énergie et/ou des substances entre eux.

13. Machine selon la revendication 11 ou 12, dans laquelle au moins l'un parmi l'agencement générant un champ magnétique et l'agencement magnétique coopérant (341) forme :
- un anneau autour dudit agencement de connexion
supplémentaire (15.35), en particulier un anneau fermé ; ou
- une pluralité d'éléments distincts (111, 112, 113) qui sont disposés autour dudit agencement de connexion supplémentaire (15.35), en particulier une pluralité d'éléments espacés autour de celui-ci.

14. Machine selon l'une quelconque des revendications 11 à 13, dans laquelle ledit agencement de connexion supplémentaire est une connexion fluidique comprenant un connecteur de fluide de corps (15) et un connecteur de fluide de module (35) qui sont en communication du point de vue des fluides lorsque le connecteur de corps (10) et le connecteur de module (34) sont fixés magnétiquement ensemble, facultativement au moins un des connecteurs de fluide de corps et de module (15, 35) comprend une vanne (351, 352, 353, 354) qui interrompt la communication de fluide lorsque le connecteur de fluide de corps (15) et le connecteur de fluide de module (35) sont déconnectés.

15. Machine selon l'une quelconque des revendications précédentes, dans laquelle le connecteur de fluide de corps (15) mène dans un conduit de fluide qui est connecté à au moins un élément parmi :
- une pompe pour entraîner un fluide dans le conduit ;
- un conditionneur thermique, tel qu'un élément chauffant et/ou un refroidisseur ; et
- une unité pour mélanger une pluralité d'ingrédients de boisson, en particulier des ingrédients qui incluent un ingrédient frais acheminé depuis le module (3) ou un ingrédient recueilli dans le module lors de l'utilisation.
